# EUROPÄISCHE PATENTSCHRIFT

(11) **EP 2 894 357 B1**
(45) Veröffentlichungstag und Bekanntmachung des Hinweises auf die Patenterteilung: **09.08.2017**
(21) Anmeldenummer: 14197859.3
(22) Anmeldetag: 15.12.2014
(51) Int. Cl.: F16B 37/04, F16B 37/06, F16B 21/04, F16B 21/02, F16B 21/06, F16B 5/06, F16B 33/00, F16B 1/00

(54) **Clipmutter, Befestigungsanordnung und Verfahren zum Herstellen einer Clipmutter**
Clip nut, fastening assembly and a method for producing a clip nut
Écrou clips, système de fixation et procédé de fabrication d'un écrou clips

(30) Priorität: 09.01.2014 DE 102014000231
(43) Veröffentlichungstag der Anmeldung: 15.07.2015
(73) Patentinhaber: SFS intec Holding AG, 9435 Heerbrugg (CH)
(72) Erfinder: Costabel, Sascha, 75417 Mühlacker (DE); Klose, Thomas, 75382 Althengstett (DE); Schendel, Olav, 70567 Stuttgart (DE)

(56) Entgegenhaltungen:
- DE-A1- 10 241 656
- DE-A1-102009 024 531
- DE-B- 1 189 799

## Beschreibung

Die Erfindung betrifft eine Clipmutter mit einem Clip, der eine erste Halteeinrichtung, eine zweite Halteeinrichtung und eine Verbindungseinrichtung, die die erste Halteeinrichtung mit der zweiten Halteeinrichtung verbindet, aufweist, wobei der Abstand der Halteeinrichtungen zueinander variabel ist, und einer Mutter, die an der zweiten Halteeinrichtung angeordnet ist, wobei an der ersten Halteeinrichtung ein elektrisches Kontaktelement angeordnet ist, wobei das elektrische Kontaktelement eine Öffnung aufweist, durch welche eine Schraube zum Eindrehen in die Mutter hindurchführbar ist, wobei das elektrische Kontaktelement dazu geeignet ist, eine elektrische Verbindung zwischen einem ersten Bauteil, das zwischen den Halteeinrichtungen des Clips angeordnet ist, und einem zweiten Bauteil, das mittels der Schraube an dem Clip befestigbar ist, herzustellen, und wobei an dem elektrischen Kontaktelement ein Dichtelement angeordnet ist, welches die Öffnung zumindest in einem in die Mutter eingedrehten Zustand der Schraube abdichtet.

Weiterhin betrifft die Erfindung eine Befestigungsanordnung sowie ein Verfahren zum Herstellen einer Clipmutter.

Derartige Clipmuttern kommen insbesondere dafür zum Einsatz, zwei Bauteile, beispielsweise Bleche, miteinander zu verbinden. Die Clipmutter wird zu diesem Zweck auf eines der Bleche in der Weise aufgeschnappt, dass eine Schraube durch das Loch in dem Blech hindurch in das Gewinde der Mutter einschraubbar ist. Mit einer solchen Schraube können beliebige andere Bauteile an das die Clipmutter tragende Bauteil angebracht werden, beispielsweise weitere Bleche oder auch Kontaktlaschen von Kabeln, etwa Erdungskabeln.

Die DE 10 2011 084 900 A1 beschreibt eine Clipmutter, die zum Befestigen einer Kontaktlasche an einem Bauteil dient. Auch hier sind zwei Haltelemente vorgesehene, die das Bauteil direkt kontaktieren, während die Mutter an der Außenseite eines der Haltelemente ohne Kontakt zum Bauteil angeordnet ist.

Bei derartigen Verbindungen elektrisch leitfähiger Elemente gilt es, Korrosion zu vermeiden. Zu diesem Zweck wird herkömmlich die Verbindung mit einem Schutzlack überzogen. Allerdings sind derartige Maßnahmen häufig nur von begrenzter Wirksamkeit. Kommt es beispielsweise durch eine Beschädigung der Lackierung doch zu einer punktuellen Korrosion, so ist damit zu rechnen, dass bald die gesamte Schutzlackierung ihren Halt verliert und somit die Verbindung und mithin die beteiligten Bauteile letztlich Schaden nehmen.

Aus der DE 11 89799 B ist eine klammerförmige Blechmutter bekannt. Diese dient dem Verbinden von Blechteilen, zwischen denen ein Dichtungsstreifen angeordnet ist, bestehend aus zwei übereinander angeordneten, durch einen Steg miteinander verbundenen und gegeneinander geneigt verlaufenden Federschenkeln. Zur zuverlässigen Verbindung der Blechteile miteinander ist vorgesehen, dass einer der Federschenkel nach außen stehende Vorsprünge aufweist, deren Höhe etwas kleiner als die Dicke des Dichtungsstreifens ist und die beim Festziehen der Schraube den Dichtungsstreifen durchdringen und sich auf einem Trägerblech abstützen.

Der Erfindung liegt die Aufgabe zugrunde, eine zuverlässige Verbindung von elektrisch leitfähigen Bauteilen zur Verfügung zu stellen, ohne dass Lackierungen erforderlich wären oder Alterungsprozesse eine Rolle spielten.

Diese Aufgabe wird mit den Merkmalen der unabhängigen Ansprüche gelöst.

Die Erfindung baut auf der gattungsgemäßen Clipmutter dadurch auf, dass das elektrische Kontaktelement ein Rohrniet ist. Durch den Clip kann eine Kontaktkorrosion weitgehend vermieden werden, denn eine Kontaktkorrosion wird insbesondere durch Ströme, die durch die Bauteile fließen, begünstigt, was durch die isolierende Dichtung verhindert wird. Ebenfalls kommt es herkömmlich durch das Eindringen von Medien zu einer Beschleunigung der Korrosion. Ein solches Eindringen von Medien wird ebenfalls durch die Dichtung verhindert. Bei einem Rohrniet handelt es sich um ein kostengünstiges Bauteil, welches in vielen Größen und verschiedenen Materialvarianten verfügbar ist. Insofern kann die Clipmutter durch Verwendung eines Rohrniets für verschiedenartige Anwendungen ausgestattet werden.

Es kann vorgesehen sein, dass eine dem ersten Bauteil zugewandte Seite des elektrischen Kontaktelements Kontaktstellen zur Verbesserung eines elektrischen Kontakts zwischen dem ersten Bauteil und dem elektrischen Kontaktelement aufweist. Neben den grundsätzlich unterschiedlichen Geometrien, die das elektrische Kontaktelement, also der Rohrniet, aufweisen kann, kann auch gezielt dafür gesorgt sein, den elektrischen Kontakt zwischen dem elektrischen Kontaktelement und dem Bauteil, auf das die Clipmutter aufgesteckt wird, zu verbessern. Hierzu dienen insbesondere Oberflächenstrukturen auf dem elektrischen Kontaktelement, die in der Lage sind, die Oberfläche des Bleches anzureißen, insbesondere beim Aufstecken der Clipmutter und/oder beim Festziehen der Schraube. Das elektrische Kontaktelement kann mit einer Verzahnung beziehungsweise abstehenden Zungen, einem oder mehreren Graten und/oder hochstehenden Kontaktflächen ausgestattet sein.

Gemäß einer bevorzugten Ausführungsform der Erfindung ist vorgesehen, dass das Dichtelement auf das elektrische Kontaktelement aufgeschoben ist. Dabei handelt es sich um eine einfache und reversible Befestigungsart.

Ebenfalls ist es möglich, dass das Dichtelement mit dem elektrischen Kontaktelement mittels Vulkanisieren verbunden ist.

Gemäß einer weiteren Ausführungsform ist vorgesehen, dass an der Mutter eine der ersten Halteeinrichtung zugewandte Dichtung vorgesehen ist. Eine solche Dichtung auf der "anderen" Seite des ersten Bauteils sorgt für eine weitere Abdichtung der verschiedenen Räume um die Clipmutter. Eine elastisch oder plastisch verformbare Dichtung ist ferner in der Lage, Bauteiltoleranzen auszugleichen. Die Dichtung kann durch einen mit dem Muttergehäuse verprägten O-Ring realisiert sein. Ebenfalls können beispielsweise kreisförmige oder rechteckige aufgespritzte, aufgeklebte oder anvulkanisierte Elastomerkomponenten als Dichtung vorgesehen werden.

Gemäß einer besonders bevorzugten weiteren Ausführungsform der erfindungsgemäßen Clipmutter ist vorgesehen, dass die Erstreckung der ersten Halteeinrichtung und der zweiten Halteeinrichtung im Wesentlichen eine x-Achse definieren und die Erstreckung einer Verbindungseinrichtung zwischen den Halteeinrichtungen im Wesentlichen eine z-Achse definiert und wobei eine y-Achse senkrecht auf der x- und der z-Achse steht, dass die Mutter an der zweiten Halteeinrichtung so angeordnet ist, dass eine Achse der Mutter parallel zur z-Achse und/oder senkrecht zur x-Achse ausrichtbar ist, und dass die Mutter aus ihrer Lage parallel zur z-Achse und/oder senkrecht zur x-Achse um die y-Achse in einer xz-Ebene unter Aufgabe ihrer Parallelität zur z-Achse und/oder ihrer senkrechten Lage zur x-Achse verschwenkbar ist. Durch die Verschwenkbarkeit der Mutter um die y-Achse kann diese so ausgerichtet werden, dass eine in die Mutter eingedrehte Schraube ein von der Schraube zu durchdringendes Loch trifft und dieses ohne Weiteres durchdringt. Es kann also nicht der Fall auftreten, dass die Achsen des Durchgangsloches und der Mutter nicht zusammenfallen. Vielmehr kann die Mutter immer so verschwenkt werden, dass die gewünschte Situation zusammenfallender Achsen vorliegt.

Ebenfalls ist es möglich, dass anstelle einer Mutter eine Komponente eines Vierteldrehverschlusses, eines Bajonettverschlusses oder einer Schnappverbindung vorgesehen ist und dass anstelle einer Schraube eine entsprechende Gegenkomponente als Befestigungskomponente vorgesehen ist.

Gemäß einer weiteren Ausführungsform ist die Clipmutter so ausgebildet, dass anstelle einer Mutter eine Komponente mir einer Bohrung zum Einsetzen eines Stiftes vorgesehen ist und dass anstelle einer Schraube ein Stift als Befestigungskomponente vorgesehen ist.

Die Erfindung betrifft ferner eine Befestigungsanordnung mit einer erfindungsgemäßen Clipmutter, einer Befestigungskomponente, einem ersten Bauteil, das zwischen den Halteeinrichtungen der Clipmutter angeordnet ist, und einem zweiten Bauteil, das mittels der Befestigungskomponente an der Clipmutter befestigbar ist.

Diese Befestigungsanordnung ist nützlicherweise so ausgebildet, dass die elektrisch leitfähigen Materialien der Befestigungsanordnung zur Minimierung von Korrosion zumindest teilweise aufeinander abgestimmt sind.

Dier Erfindung betrifft weiterhin ein Verfahren zum Herstellen einer erfindungsgemäßen Clipmutter mit den Schritten:
- Verbinden des elektrischen Kontaktelementes mit dem Dichtelement zum Herstellen einer Anordnung aus elektrischem Kontaktelement und Dichtelement,
- Verbinden der Anordnung aus elektrischem Kontaktelement und Dichtelement mit der ersten Halteeinrichtung des Clips.

In diesem Zusammenhang ist es besonders nützlich, dass nach dem Verbinden der Anordnung aus elektrischem Kontaktelement und Dichtelement mit der ersten Halteeinrichtung der Clipmutter der Rohrniet durch Umbördeln an der ersten Halteeinrichtung festgelegt wird. Insofern steht ein kostengünstiges Bauteil zu Verfügung, das sich zudem leicht und sicher mit der Clipmutter verbinden lässt.

Der Erfindung liegt die Erkenntnis zugrunde, dass sich Kontaktkorrosion durch die richtige Wahl des Werkstoffes der elektrischen Kontaktkomponente weitgehend vermeiden lässt. Neben dem elektrischen Strom, der durch die Bauteile fließt, würde der Einfluss weiterer Medien die Korrosion ungünstig beschleunigen. Das Dichtelement sorgt für eine Langlebigkeit der Verbindung. Das Dichtelement besteht vorzugsweise aus einem Elastomer. Dies führt aufgrund des großen Reibungskoeffizienten zu einem sicheren Halt der Clipmutter auf dem Blech, so dass ein selbstständiges Verschieben der Clipmutter vermieden wird. Die Clipmutter ist durch die erfindungsgemäße Anordnung nur in einem begrenzten Bereich elektrisch leitfähig, so dass unerwünschte elektrische Kontakte vermieden werden. Wegen der geeigneten Materialwahlmöglichkeit und der gewählten Dichtungen ist die Clipmutter in unterschiedlichen Umgebungen einsetzbar, so dass Umwelteinflüsse kaum schädigenden Einfluss auf die Befestigungsanordnung haben.

Die Erfindung wird nun mit Bezug auf die begleitenden Zeichnungen anhand besonders bevorzugter Ausführungsformen beispielhaft erläutert.

Es zeigen:
- Figur 1: eine perspektivische Darstellung einer teilfertigen erfindungsgemäßen Clipmutter;
- Figur 2: eine perspektivische Darstellung eines elektrischen Kontaktelementes und eines Dichtelementes;
- Figur 3: eine perspektivische Darstellung eines Clips mit eingesetztem Kontaktelement;
- Figur 4: eine perspektivische Darstellung eines Clips mit entferntem Kontaktelement;
- Figur 5: eine perspektivische sowie eine geschnittene Darstellung eines elektrischen Kontaktelementes gemäß einer ersten Ausführungsform;
- Figur 6: eine perspektivische sowie eine geschnittene Darstellung eines elektrischen Kontaktelementes gemäß einer zweiten Ausführungsform;
- Figur 7: eine perspektivische sowie eine geschnittene Darstellung eines elektrischen Kontaktelementes gemäß einer dritten Ausführungsform;
- Figur 8: eine geschnittene Darstellung eines elektrischen Kontaktelements mit aufgeschobener Dichtung;
- Figur 9: eine geschnittene Darstellung eines elektrischen Kontaktelementes mit anvulkanisierter Dichtung;
- Figur 10: eine weitere perspektivische Darstellung einer erfindungsgemäßen Clipmutter;
- Figur 11: eine perspektivische Darstellung eines Clips mit eingesetztem elektrischen Kontaktelement vor Festlegen des elektrischen Kontaktelementes an dem Clip;
- Figur 12: eine perspektivische Darstellung eines Clips mit eingesetztem elektrischen Kontaktelement nach Festlegen des elektrischen Kontaktelementes an dem Clip;
- Figur 13: eine Schnittdarstellung eines Clips mit eingesetztem elektrischem Kontaktelement mit Dichtung;
- Figur 14: eine Befestigungsanordnung in perspektivischer Darstellung;
- Figur 15: eine Vorderansicht der Befestigungsanordnung gemäß Figur 14 sowie einen Schnitt durch die Befestigungsanordnung;
- Figur 16: eine perspektivische Darstellung einer weiteren Befestigungsanordnung;
- Figur 17: eine perspektivische Darstellung einer weiteren Befestigungsanordnung;
- Figur 18: eine Vorderansicht der Befestigungsanordnung gemäß Figur 17 sowie ein Schnitt durch die Befestigungsanordnung.

Bei der nachfolgenden Beschreibung der Zeichnungen bezeichnen gleiche Bezugszeichen gleiche oder vergleichbare Komponenten.

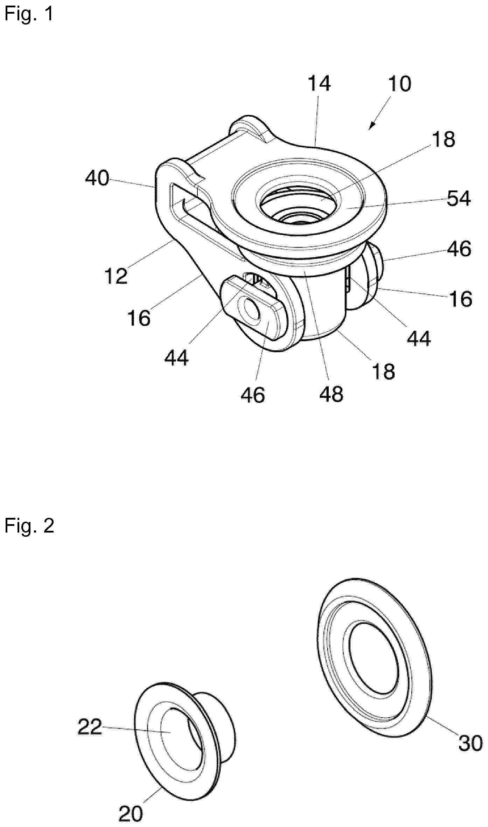

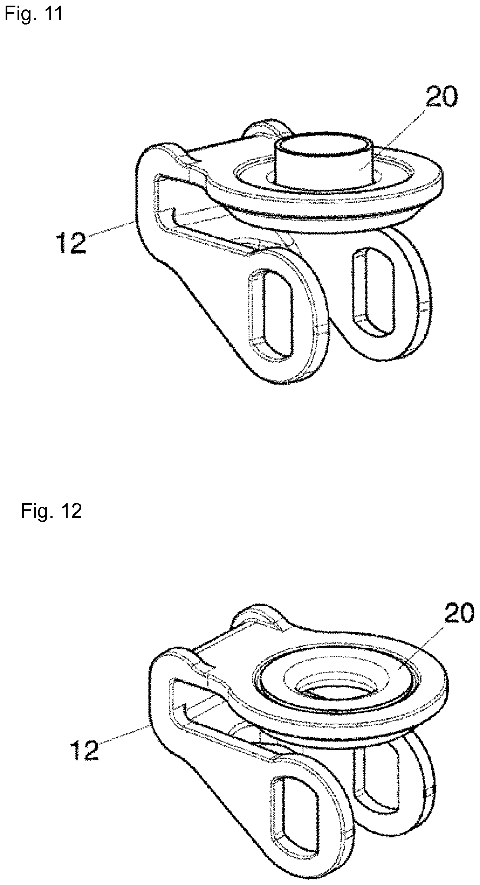

Figur 1 zeigt eine perspektivische Darstellung einer teilfertigen erfindungsgemäßen Clipmutter 10. Figur 2 zeigt eine perspektivische Darstellung eines elektrischen Kontaktelementes 20 und eines Dichtelementes 30. Die Clipmutter 10 umfasst einen Clip 12, der vorzugsweise aus einem zähelastischen Kunststoff gefertigt ist. Hierdurch wird die erforderlich Elastizität beim Aufschnappen auf Bauteile unterschiedlicher Stärke gewährleistet. Bestandteile des Clips 12 sind eine erste Halteeinrichtung 14 und eine zweite Halteeinrichtung 16. Letztere ist in der vorliegenden Ausführungsform durch zwei flächige Haltearme mit darin vorgesehenen Öffnungen 44 realisiert. Die erste Halteeinrichtung 14 und die zweite Halteeinrichtung 16 sind durch eine Verbindungseinrichtung 40 miteinander verbunden. Die erste Halteeinrichtung 14 ist plattenförmig. Eine Mutter 18 besteht vorzugsweise aus einem hochfesten Kunststoff, um die Kräfte, die beim Anziehen einer Schraube 24 entstehen, aufzunehmen. Ebenfalls kann die Mutter 18 aus Metall gefertigt sein. Die Mutter 18 hat zwei gegenüberliegende seitliche Fortsätze 46 und einen auskragenden Rand 48. Mit ihren Fortsätzen 46 lagert die Mutter 18 in den Öffnungen 44 der zweiten Halteeinrichtung, wobei eine Verschwenkbarkeit der Mutter 18 um eine die Fortsätze 46 verbindende Achse gegeben ist. Diese Verschwenkbarkeit kann insbesondere durch den Anschlag des Randes 48 der Mutter 18 an der ersten Halteeinrichtung 14 begrenzt sein. Die erste Halteeinrichtung 14 wird mit einem elektrischen Kontaktelement 20 gemäß Figur 2 ausgestattet, welches eine Öffnung 22 zum Durchführen einer in die Mutter 18 zu schraubenden Schraube 24 aufweist. Mit dem Kontaktelement 20 ist ein Dichtelement 30 verbindbar. Das Kontaktelement 20 und das Dichtelement 30 lassen sich an der ersten Halteeinrichtung 14 befestigen. Das Dichtelement 30 kommt dabei auf der der Mutter 18 zugewandten Seite der ersten Halteeinrichtung 14 zu liegen. In der ersten Halteeinrichtung 14 ist eine Vertiefung 54 vorgesehen, die Raum für den der Mutter 18 abgewandten Teil des Kontaktelementes 20 bietet, so dass dieses nicht über die Oberfläche der ersten Halteeinrichtung 14 hervorsteht. Das Montageverfahren ist anhand der Figuren 11 und 12 näher erläutert.

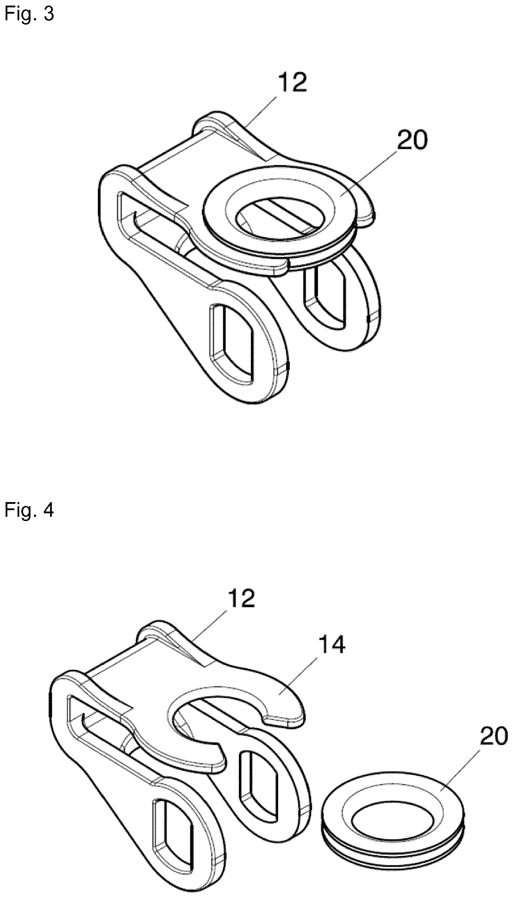

Figur 3 zeigt eine perspektivische Darstellung eines Clips 12 mit eingesetztem Kontaktelement 20.

Figur 4 zeigt eine perspektivische Darstellung eines Clips 12 mit entferntem Kontaktelement 20. Bei dieser Ausführungsform wird das elektrische Kontaktelement 20 mit der hier nicht explizit dargestellten Dichtung 38 in ein als gabelförmige Struktur gestaltete Aufnahme der ersten Halteeinrichtung 14 eingesetzt. Die gabelförmige Struktur stellt dabei die zum Einsetzen des elektrischen Kontaktelementes 20 erforderliche Elastizität zur Verfügung.

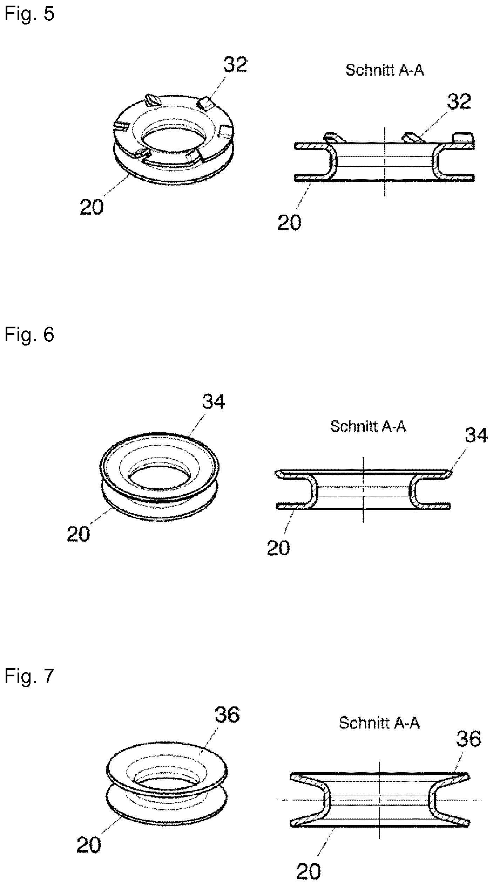

Figur 5 zeigt eine perspektivische sowie eine geschnittene Darstellung eines elektrischen Kontaktelementes 20 gemäß einer ersten Ausführungsform. Zur Realisierung einer verbesserten elektrischen Leitfähigkeit zwischen dem elektrischen Kontaktelement 20 und dem Bauteil, auf das die Clipmutter 10 aufgeschnappt wird, sind Zungen 32 an verschiedenen Stellen des Umfangs des elektrischen Kontaktelementes 20 vorgesehen. Vergleichbare Ausführungsformen zeigen Verzahnungen. Hierdurch wird beim Aufstecken der Clipmutter 10 auf das Bauteil 26 und/oder beim Festziehen der Schraube 24 in der Clipmutter 10 die Oberfläche des Bauteils 26 angerissen. Bei der in Figur 5 dargestellten Ausführungsform sind Zungen 32 nur an einer Seite des Kontaktelementes 20 vorgesehen. Diese Zungen 32 würden also nur das auf der der Mutter 18 abgewandten Seite der Halteeinrichtung 14 angeordnete Element verletzen und somit die elektrische Leitfähigkeit zwischen diesem und dem Kontaktelement verbessern. Ebenso können Zungen oder dergleichen an der anderen Seite des Kontaktelementes 20 vorgesehen sein, um eben auch das Bauelement anzureißen, auf welches die Clipmutter 10 aufgesteckt wird.

Figur 6 zeigt eine perspektivische sowie eine geschnittene Darstellung eines elektrischen Kontaktelementes 20 gemäß einer zweiten Ausführungsform. Das hier dargestellte elektrische Kontaktelement 20 ist mit einem umlaufenden Grat 34 ausgestattet. Auch dieser schneidet sich durch Kraftanwendung in das Bauteil 26, auf das die Clipmutter 10 aufgesteckt wird, ein. Ebenso wie die Zungen 32 gemäß Figur 5 beidseitig des Kontaktelementes vorgesehen sein können, kann auch der Grat 34 gemäß Figur 6 beidseitig vorgesehen sein.

Figur 7 zeigt eine perspektivische sowie eine geschnittene Darstellung eines elektrischen Kontaktelementes 20 gemäß einer dritten Ausführungsform. Hier endet das elektrische Kontaktelement 20 in schrägen Flächen 36. Somit wird auch hier die Scharfkantigkeit der nicht parallelen Fläche bei ihrem Anschlag am Bauteil 26 benutzt, um die elektrische Leitfähigkeit zu verbessern. Ferner ist eine Symmetrielinie gezeigt. Das Kontaktelement 30 kann zusätzlich zu seiner Rotationssymmetrie auch bezüglich dieser Symmetrielinie symmetrisch sein. Dies ist allerdings nicht erforderlich. Ebenso kann das Kontaktelement 20 nur einseitig mit schrägen Flächen 36 ausgestattet sein.

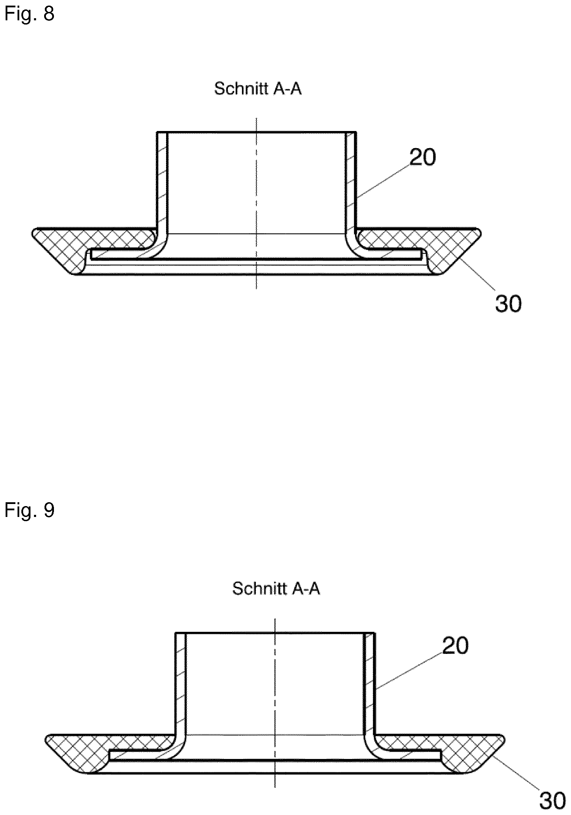

Figur 8 zeigt eine geschnittene Darstellung eines elektrischen Kontaktelements 20 mit aufgeschobener Dichtung 38. Figur 9 zeigt eine geschnittene Darstellung eines elektrischen Kontaktelementes 20 mit anvulkanisierter Dichtung 38. Während bei der Ausführungsform gemäß Figur 8 die Dichtung 30 auf das elektrische Kontaktelement 20 aufgeschoben ist, ist diese gemäß Figur 9 an dem elektrischen Kontaktelement 20 durch Vulkanisieren festgelegt.

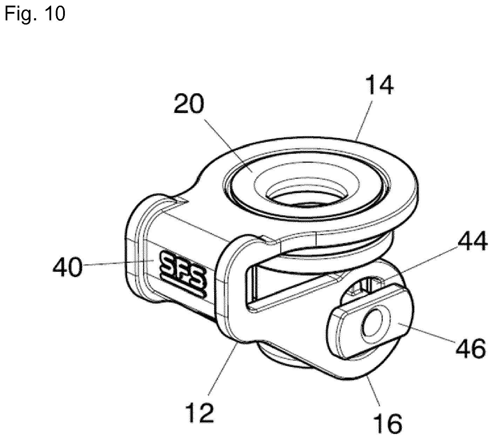

Figur 10 zeigt eine weitere perspektivische Darstellung einer erfindungsgemäßen Clipmutter 10.

Figur 11 zeigt eine perspektivische Darstellung eines Clips 12 mit eingesetztem elektrischen Kontaktelement 20 vor Festlegen des elektrischen Kontaktelementes 20 an dem Clip 12. Figur 12 zeigt eine perspektivische Darstellung eines Clips 12 mit eingesetztem elektrischen Kontaktelement 20 nach Festlegen des elektrischen Kontaktelementes 20 an dem Clip 12. In dem Montagezustand gemäß Figur 11 ist das elektrische Kontaktelement, der Rohrniet 20, von unten in den Clip 12 eingesteckt. Um dem Rohrniet 20 Halt in dem Clip 12 zu geben, wird der Rand 48 des Rohrniets 20 umgebördelt, was in Figur 12 erkennbar ist.

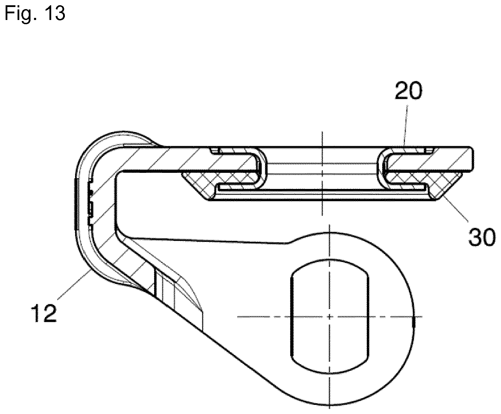

Figur 13 zeigt eine Schnittdarstellung eines Clips 12 mit eingesetztem elektrischem Kontaktelement 20 mit Dichtelement 30.

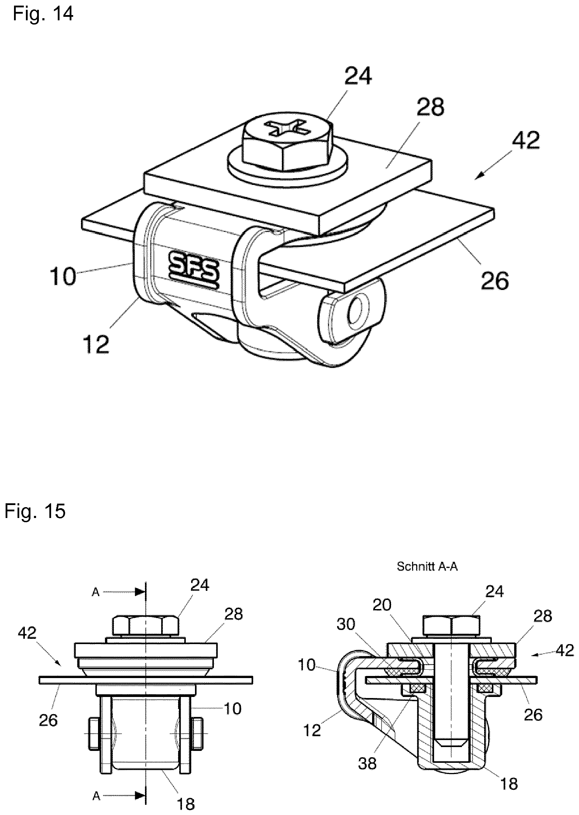

Figur 14 zeigt eine Befestigungsanordnung 42 in perspektivischer Darstellung. Figur 15 zeigt eine Vorderansicht der Befestigungsanordnung 42 gemäß Figur 14 sowie einen Schnitt durch die Befestigungsanordnung 42. Die Clipmutter 10 ist auf ein erstes Bauteil 26 aufgesteckt. Dabei kontaktiert die Mutter 18 mit eingelegter Dichtung 38 da erste Bauteil 26. Von der anderen Seite kontaktiert das elektrische Kontaktlimit 20 das erste Bauteil 26, ebenso wie die Dichtung 30. Auf die Clipmutter 10 ist ein zweites Bauteil 26 mittels einer Schraube 24 aufgeschraubt. Durch das Eindrehen der Schraube 24 in die Mutter 18 wird die Anordnung komprimiert, so dass insgesamt durch die Wirkung des Dichtelementes 30 am elektrischen Kontaktelement 20 sowie in der Dichtung 38 in der Mutter 18 gegeneinander abgedichtete Bereiche zur Verfügung gestellt werden.

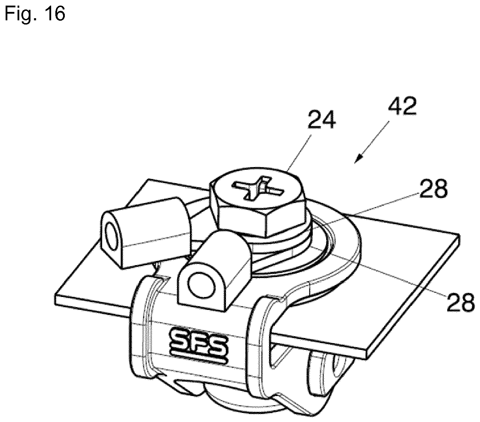

Figur 16 zeigt eine perspektivische Darstellung einer weiteren Befestigungsanordnung 42. Die hier dargestellte Ausführungsform unterscheidet sich von derjenigen gemäß den Figuren 14 und 15 dadurch, dass durch die Schraube 24 nicht eine Platte aufgeschraubt wird, sondern Kabelschuhe 28. Die Erfindung ist daher insbesondere nicht darauf beschränkt, dass auf die Clipmutter durch eine Schraube 24 ein einziges Bauteil aufgeschraubt wird. Vielmehr können beliebig viele Bauteile aufgeschraubt werden.

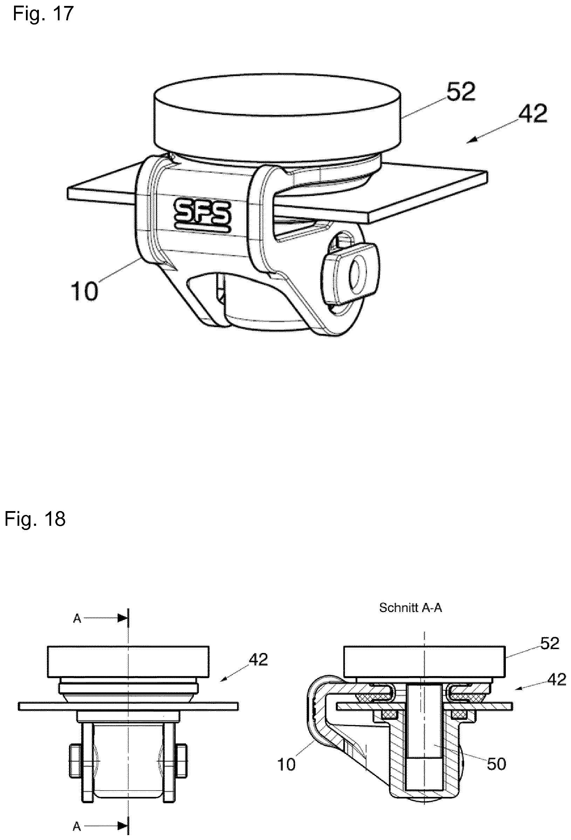

Figur 17 zeigt eine perspektivische Darstellung einer weiteren Befestigungsanordnung 42. Diese Ausführungsform unterscheidet sich von derjenigen gemäß den Figuren 14 und 15 dadurch, dass nicht eine Platte aufgeschraubt ist, sondern ein Erdungsmodul ("grounding module"), hier beispielsweise nach ASNE 0425. Dieses umfasst einen Gewindeschaft 50 und einen Anschlusskörper 52. Da der Anschlusskörper 52 mit einer nicht dargestellten Dichtung auf der ersten Halteeinrichtung 14 aufliegen soll, ist in der ersten Halteeinrichtung 14 die in Figur 1 gezeigte Vertiefung 54 vorgesehen. Diese bietet den Raum, um den Teil des Kontaktelementes 20, welches auf der der Mutter 18 abgewandten Seite der Halteeinrichtung 14 zu liegen kommt, aufzunehmen, ohne dass der sichere Kontakt eines am Anschlusskörper 52 angeordneten Dichtelementes mit der ersten Halteeinrichtung 14 beeinträchtigt würde.

Figur 18 zeigt eine Vorderansicht der Befestigungsanordnung 42 gemäß Figur 17 sowie ein Schnitt durch die Befestigungsanordnung 42.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Clipmutter
- 12: Clip
- 14: erste Halteeinrichtung
- 16: zweite Halteeinrichtung
- 18: Mutter
- 20: elektrisches Kontaktelement
- 22: Öffnung
- 24: Schraube
- 26: erstes Bauteil
- 28: zweites Bauteil
- 30: Dichtelement
- 32: Kontaktzunge
- 34: Grat
- 36: Kontaktfläche
- 38: Dichtung
- 40: Verbindungseinrichtung
- 42: Befestigungsanordnung
- 44: Öffnung
- 46: Fortsatz
- 48: Rand
- 50: Gewindeschaft
- 52: Anschlusskörper
- 54: Vertiefung

## Patentansprüche

1. Clipmutter (10) mit
- einem Clip (12), der eine erste Halteeinrichtung (14), eine zweite Halteeinrichtung (16) und eine Verbindungseinrichtung, die die erste Halteeinrichtung mit der zweiten Halteeinrichtung verbindet, aufweist, wobei der Abstand der Halteeinrichtungen (14, 16) zueinander variabel ist, und
- einer Mutter (18), die an der zweiten Halteeinrichtung (16) angeordnet ist,
- wobei an der ersten Halteeinrichtung (14) ein elektrisches Kontaktelement (20) angeordnet ist, wobei das elektrische Kontaktelement (20) eine Öffnung (22) aufweist, durch welche eine Schraube (24) zum Eindrehen in die Mutter (18) hindurchführbar ist,
- wobei das elektrische Kontaktelement (20) dazu geeignet ist, eine elektrische Verbindung zwischen einem ersten Bauteil (26), das zwischen den Halteeinrichtungen (14, 16) des Clips (12) angeordnet ist, und einem zweiten Bauteil (28), das mittels der Schraube (24) an dem Clip (12) befestigbar ist, herzustellen, und
- wobei an dem elektrischen Kontaktelement (20) ein Dichtelement (30) angeordnet ist, welches die Öffnung (22) zumindest in einem in die Mutter (18) eingedrehten Zustand der Schraube (24) abdichtet,
**dadurch gekennzeichnet, dass** das elektrische Kontaktelement (20) ein Rohrniet ist.

2. Clipmutter (10) nach Anspruch 1, **dadurch gekennzeichnet, dass** eine dem ersten Bauteil (26) zugewandte Seite des elektrischen Kontaktelements (20) Kontaktstellen (32, 34, 36) zur Verbesserung eines elektrischen Kontakts zwischen dem ersten Bauteil (26) und dem elektrischen Kontaktelement (20) aufweist.

3. Clipmutter (10) nach einem der vorhergehenden Ansprüchen, **dadurch gekennzeichnet, dass** das Dichtelement (30) auf das elektrische Kontaktelement (20) aufgeschoben ist.

4. Clipmutter (10) nach einem der vorhergehenden Ansprüchen, **dadurch gekennzeichnet, dass** das Dichtelement (30) mit dem elektrischen Kontaktelement (20) mittels Vulkanisieren verbunden ist.

5. Clipmutter (10) nach einem der vorhergehenden Ansprüchen, **dadurch gekennzeichnet, dass** an der Mutter (18) eine der ersten Halteeinrichtung (14) zugewandte Dichtung (38) vorgesehen ist.

6. Clipmutter (10) nach einem der vorhergehenden Ansprüchen, **dadurch gekennzeichnet,**
- **dass** die Erstreckung der ersten Halteeinrichtung (14) und der zweiten Halteeinrichtung (16) im Wesentlichen eine x-Achse definieren und die Erstreckung einer Verbindungseinrichtung (40) zwischen den Halteeinrichtungen (14, 16) im Wesentlichen eine z-Achse definiert und wobei eine y-Achse senkrecht auf der x- und der z-Achse steht,
- **dass** die Mutter (18) an der zweiten Halteeinrichtung (16) so angeordnet ist, dass eine Achse der Mutter (18) parallel zur z-Achse und/oder senkrecht zur x-Achse ausrichtbar ist, und
- **dass** die Mutter (18) aus ihrer Lage parallel zur z-Achse und/oder senkrecht zur x-Achse um die y-Achse in einer xz-Ebene unter Aufgabe ihrer Parallelität zur z-Achse und/oder ihrer senkrechten Lage zur x-Achse verschwenkbar ist.

7. Clipmutter (10) mit
- einem Clip (12), der eine erste Halteeinrichtung (14), eine zweite Halteeinrichtung (16) und eine Verbindungseinrichtung, die die erste Halteeinrichtung mit der zweiten Halteeinrichtung verbindet, aufweist, wobei der Abstand der Halteeinrichtung (14, 16) zueinander variabel ist, und
- einer Komponente eines Vierteldrehverschlusses, eines Bajonettverschlusses oder einer Schnappverbindung, die an der zweiten Halteeinrichtung (16) angeordnet ist,
- wobei an der ersten Halteeinrichtung (14) ein elektrisches Kontaktelement (20) angeordnet ist, wobei das elektrische Kontaktelement (20) eine Öffnung (22) aufweist, durch welche eine entsprechende Gegenkomponente zum Befestigen in der Komponente hindurchführbar ist,
- wobei das elektrische Kontaktelement (20) dazu geeignet ist, eine elektrische Verbindung zwischen einem ersten Bauteil (26), das zwischen den Halteeinrichtungen (14, 16) des Clips (12) angeordnet ist, und einem zweiten Bauteil (28), das mittels der Gegenkomponente an dem Clip (12) befestigbar ist, herzustellen, und
- wobei an dem elektrischen Kontaktelement (20) ein Dichtelement (30) angeordnet ist, welches die Öffnung (22) zumindest in einem in der Komponente befestigten Zustand der Gegenkomponente abdichtet, wobei das elektrische Kontaktelement (20) ein Rohrniet ist.

8. Clipmutter (10) mit
- einem Clip (12), der eine erste Halteeinrichtung (14), eine zweite Halteeinrichtung (16) und eine Verbindungseinrichtung, die die erste Halteeinrichtung mit der zweiten Halteeinrichtung verbindet, aufweist, wobei der Abstand der Halteeinrichtung (14, 16) zueinander variabel ist, und
- einer Komponente mit einer Bohrung zum Einsetzen eines Stiftes, die an der zweiten Halteeinrichtung (16) angeordnet ist,
- wobei an der ersten Halteeinrichtung (14) ein elektrisches Kontaktelement (20) angeordnet ist, wobei das elektrische Kontaktelement (20) eine Öffnung (22) aufweist, durch welche ein Stift zum Befestigen in der Komponente hindurchführbar ist,
- wobei das elektrische Kontaktelement (20) dazu geeignet ist, eine elektrische Verbindung zwischen einem ersten Bauteil (26), das zwischen den Halteeinrichtungen (14, 16) des Clips (12) angeordnet ist, und einem zweiten Bauteil (28), das mittels des Stiftes an dem Clip (12) befestigbar ist, herzustellen, und
- wobei an dem elektrischen Kontaktelement (20) ein Dichtelement (30) angeordnet ist, welches die Öffnung (22) zumindest in einem in der Komponente befestigten Zustand des Stiftes abdichtet, wobei das elektrische Kontaktelement (20) ein Rohrniet ist.

9. Befestigungsanordnung (42) mit einer Clipmutter (10) nach einem der vorhergehenden Ansprüche, einer Befestigungskomponente (24), einem ersten Bauteil (26), das zwischen den Halteeinrichtungen (14, 16) der Clipmutter (10) angeordnet ist, und einem zweiten Bauteil (18), das mittels der Befestigungskomponente an der Clipmutter (10) befestigbar ist.

10. Befestigungsanordnung (42) nach Anspruch 9, **dadurch gekennzeichnet, dass** die elektrisch leitfähigen Materialien der Befestigungsanordnung (42) zur Minimierung von Korrosion zumindest teilweise aufeinander abgestimmt sind.

11. Verfahren zum Herstellen einer Clipmutter (10) nach einem der Ansprüche 1 bis 8, mit den Schritten:
- Verbinden des elektrischen Kontaktelementes (20) mit dem Dichtelement (30) zum Herstellen einer Anordnung aus elektrischem Kontaktelement (20) und Dichtelement (30),
- Verbinden der Anordnung aus elektrischem Kontaktelement (20) und Dichtelement (30) mit der ersten Halteeinrichtung (14) des Clips.

12. Verfahren zum Herstellen einer Clipmutter (10) nach Anspruch 11, **dadurch gekennzeichnet, dass** nach dem Verbinden der Anordnung aus elektrischem Kontaktelement (20) und Dichtelement (30) mit der ersten Halteeinrichtung (14) der Clipmutter (10) der Rohrniet durch Umbördeln an der ersten Halteeinrichtung (14) festgelegt wird.

## Claims

1. A clip nut (10) with
- a clip (12) which comprises a first holding device (14), a second holding device (16) and a connecting device, which connects the first holding device to the second holding device, wherein the spacing of the holding devices (14, 16) from one another is variable, and
- a nut (18), which is arranged on the second holding device (16),
- wherein an electrical contact element (20) is arranged on the first holding device (14), wherein the electrical contact element (20) comprises an opening (22), through which a screw (24) can be passed for screwing into the nut (18),
- wherein the electrical contact element (20) is suitable for creating an electrical connection between a first component (26), which is arranged between the holding devices (14, 16) of the clip (12), and a second component (28), which can be fastened to the clip (12) by means of the screw (24), and
- wherein a sealing element (30) is arranged on the electrical contact element (20), which sealing element seals the opening (22) at least in a state of the screw (24) when it is screwed into the nut (18),
**characterised in that** the electrical contact element (20) is a tubular rivet.

2. The clip nut (10) according to claim 1, **characterised in that** a side of the electrical contact element (20) facing the first component (26) comprises contact points (32, 34, 36) for improving an electrical contact between the first component (26) and the electrical contact element (20).

3. The clip nut (10) according to any one of the preceding claims, **characterised in that** the sealing element (30) is pushed onto the electrical contact element (20).

4. The clip nut (10) according to any one of the preceding claims, **characterised in that** the sealing element (30) is connected by means of vulcanisation to the electrical contact element (20).

5. The clip nut (10) according to any one of the preceding claims, **characterised in that** a seal (38) facing the first holding device (14) is provided on the nut (18).

6. The clip nut (10) according to any one of the preceding claims, **characterised in that**
- the extension of the first holding device (14) and of the second holding device (16) essentially defines an x-axis and the extension of a connecting device (40) between the holding devices (14, 16) essentially defines a z-axis and wherein a y-axis is perpendicular to the x- and the z-axis,
- the nut (18) is arranged on the second holding device (16) in such a way that an axis of the nut (18) can be orientated parallel to the z-axis and/or perpendicular to the x-axis, and
- the nut (18) can be swivelled out of its position parallel to the z-axis and/or perpendicular to the x-axis about the y-axis in an xz-plane thereby abandoning its parallelism to the z-axis and/or its perpendicular position to the x-axis.

7. A clip nut (10) with
- a clip (12) which comprises a first holding device (14), a second holding device (16) and a connecting device, which connects the first holding device to the second holding device, wherein the spacing of the holding devices (14, 16) from one another is variable, and
- a component of a quarter-turn lock, a bayonet lock or a snap connection which is arranged on the second holding device (16),
- wherein an electrical contact element (20) is arranged on the first holding device (14), wherein the electrical contact element (20) comprises an opening (22), through which a corresponding counter-component can be passed for the fixing in the component,
- wherein the electrical contact element (20) is suitable for creating an electrical connection between a first component (26), which is arranged between the holding devices (14, 16) of the clip (12), and a second component (28), which can be fastened to the clip (12) by means of the counter-component (24), and
- wherein a sealing element (30) is arranged on the electrical contact element (20), which sealing element seals the opening (22) at least in a state of the counter-component when it is fastened in the component,
wherein the electrical contact element (20) is a tubular rivet.

8. A clip nut (10) with
- a clip (12) which comprises a first holding device (14), a second holding device (16) and a connecting device, which connects the first holding device to the second holding device, wherein the spacing of the holding devices (14, 16) from one another is variable, and
- a component with a bored hole for the insertion of a pin, which is arranged on the second holding device (16),
- wherein an electrical contact element (20) is arranged on the first holding device (14), wherein the electrical contact element (20) comprises an opening (22), through which a pin can be passed for fastening in the component,
- wherein the electrical contact element (20) is suitable for creating an electrical connection between a first component (26), which is arranged between the holding devices (14, 16) of the clip (12), and a second component (28), which can be fastened to the clip (12) by means of the pin, and
- wherein a sealing element (30) is arranged on the electrical contact element (20), which sealing element seals the opening (22) at least in a state of the pin when it is fastened in the component,
wherein the electrical contact element (20) is a tubular rivet.

9. A fastening assembly (42) with clip nut (10) according to any one of the preceding claims, a fastening component (24), a first component (26) which is arranged between the holding devices (14, 16) of the clip nut (10), and a second component (18), which can be fastened to the clip nut (10) by means of the fastening component.

10. The fastening assembly (42) according to claim 9, **characterised in that** the electrically conductive materials of the fastening assembly (42) are at least partially matched to one another to minimise corrosion.

11. A method for producing a clip nut (10) according to any one of claims 1 to 8, with the steps:
- connecting the electrical contact element (20) to the sealing element (30) to produce an assembly comprising electrical contact element (20) and sealing element (30),
- connecting of the assembly comprising electrical contact element (20) and sealing element (30) to the first holding device (14) of the clip.

12. The method for producing a clip nut (10) according claim 11, **characterised in that,** after the connecting of the assembly comprising electrical contact element (20) and sealing element (30) to the first holding device (14) of the clip nut (10), the tubular rivet is fixed to the first holding device (14) by flanging.

## Revendications

1. Ecrou clips (10) avec
- une pince (12) qui comporte un premier système de fixation (14), un deuxième système de fixation (16) et un système de liaison qui relie le premier système de fixation au deuxième système de fixation, l'intervalle entre les systèmes de fixation (14,16) étant variable, et
- un écrou (18) qui est disposé sur le deuxième système de fixation (16),
- un élément de contact électrique (20) étant disposé sur le premier système de fixation (14), l'élément de contact électrique (20) comportant une ouverture (22) à travers laquelle une vis (24) peut être passée pour vissage dans l'écrou (18),
- l'élément de contact électrique (20) étant adapté pour réaliser une liaison électrique entre un premier composant (26), disposé entre les systèmes de fixation (14,16) de la pince (12), et un deuxième composant (28), pouvant être fixé au moyen de la vis (24) sur la pince (12), et
- un élément d'étanchéité (30) étant disposé sur l'élément de contact électrique (20), lequel étanchéifie l'ouverture (22) au moins dans un état vissé de la vis (24) dans l'écrou (18),
**caractérisé en ce que** l'élément de contact électrique (20) est un rivet tubulaire.

2. Ecrou clips (10) selon la revendication 1, **caractérisé en ce qu'**un côté de l'élément de contact électrique (20) tourné vers le premier composant (26) comporte des points de contact (32,34,36) pour améliorer un contact électrique entre le premier composant (26) et l'élément de contact électrique (20).

3. Ecrou clips (10) selon l'une quelconque des revendications précédentes, **caractérisé en ce que** l'élément d'étanchéité (30) est glissé sur l'élément de contact électrique (20).

4. Ecrou clips (10) selon l'une quelconque des revendications précédentes, **caractérisé en ce que** l'élément d'étanchéité (30) est relié à l'élément de contact électrique (20) au moyen de la vulcanisation.

5. Ecrou clips (10) selon l'une quelconque des revendications précédentes, **caractérisé en ce qu'**un joint d'étanchéité (38) tourné vers le premier système de fixation (14) est prévu sur l'écrou (18).

6. Ecrou clips (10) selon l'une quelconque des revendications précédentes, **caractérisé en ce que**
- l'extension du premier système de fixation (14) et du deuxième système de fixation (16) définit un axe x et l'extension d'un système de liaison (40) définit entre les systèmes de fixation (14,16) pour l'essentiel un axe z et un axe y étant perpendiculaire à l'axe x et à l'axe z,
- l'écrou (18) est disposé sur le deuxième système de fixation (16) de telle manière qu'un axe de l'écrou (18) peut être orienté parallèlement à l'axe z et/ou perpendiculairement à l'axe x, et
- l'écrou (18) peut être pivoté de sa position parallèlement à l'axe z et/ou perpendiculairement à l'axe x autour de l'axe y dans un plan xz en raison de son parallélisme à l'axe z et/ou de sa position perpendiculaire à l'axe x.

7. Ecrou clips (10) avec
- une pince (12) qui comporte un premier système de fixation (14), un deuxième système de fixation (16) et un système de liaison qui relie le premier système de fixation au deuxième système de fixation, l'intervalle entre les systèmes de fixation (14,16) étant variable l'un par rapport à l'autre, et
- un composant d'une fermeture quart de tour, d'une fermeture à baïonnette ou d'un assemblage à encliquetage, qui est disposé sur le deuxième système de fixation (16),
- un élément de contact électrique (20) étant disposé sur le premier système de fixation (14), l'élément de contact électrique (20) comportant une ouverture (22) à travers laquelle un contre-composant correspondant peut être passé pour fixation dans le composant,
- l'élément de contact électrique (20) étant adapté pour réaliser une liaison électrique entre un premier composant (26), disposé entre les systèmes de fixation (14,16) de la pince (12), et un deuxième composant (28), pouvant être fixé sur la pince (12) au moyen du contre-composant, et
- un élément d'étanchéité (30) étant disposé sur l'élément de contact électrique (20), lequel étanchéifie l'ouverture (22) au moins dans un état fixé dans le composant du contre-composant,
l'élément de contact électrique (20) étant un rivet tubulaire.

8. Ecrou clips (10) avec
- une pince (12) qui comporte un premier système de fixation (14), un deuxième système de fixation (16) et un système de liaison qui relie le premier système de fixation au deuxième système de fixation, l'intervalle entre les systèmes de fixation (14,16) étant variable l'un par rapport à l'autre, et
- un composant avec un trou pour insérer une tige, qui est disposé sur le deuxième système de fixation (16),
- un élément de contact électrique (20) étant disposé sur le premier système de fixation (14), l'élément de contact électrique (20) comportant une ouverture (22) à travers laquelle une tige peut être passée pour fixation dans le composant,
- l'élément de contact électrique (20) étant adapté pour réaliser une liaison électrique entre un premier composant (26), disposé entre les systèmes de fixation (14,16) de la pince (12), et un deuxième composant (28), pouvant être fixé au moyen de la tige sur la pince (12), et
- un élément d'étanchéité (30) étant disposé sur l'élément de contact électrique (20), lequel étanchéifie l'ouverture (22) au moins dans un état fixé de la tige dans le composant,
l'élément de contact électrique (20) étant un rivet tubulaire.

9. Agencement de fixation (42) avec un écrou clips (10) selon l'une quelconque des revendications précédentes, un composant de fixation (24), un premier composant (26), qui est disposé entre les systèmes de fixation (14,16) de l'écrou clips (10) et un deuxième composant (18), qui peut être fixé sur l'écrou clips (10) au moyen du composant de fixation.

10. Agencement de fixation (42) selon la revendication 9, **caractérisé en ce que** des matériaux électro-conducteurs de l'agencement de fixation (42) sont harmonisés au moins en partie entre eux pour minimiser la corrosion.

11. Procédé de fabrication d'un écrou clips (10) selon l'une quelconque des revendications 1 à 8 avec les étampes :
- d'assemblage de l'élément de contact électrique (20) avec l'élément d'étanchéité (30) pour réaliser un agencement composé de l'élément de contact électrique (20) et de l'élément d' étanchéité (30),
- d'assemblage de l'agencement composé de l'élément de contact électrique (20) et de l'élément d'étanchéité (30) avec le premier système de fixation (14) de la pince.

12. Procédé pour fabriquer un écrou clips (10) selon la revendication 11, **caractérisé en ce qu'**après l'assemblage de l'agencement composé de l'élément de contact électrique (20) et de l'élément d'étanchéité (30) avec le premier système de fixation (14) de l'écrou clips (10), le rivet tubulaire est fixé par rabattement du bord sur le premier système de fixation (14) .
